# EUROPÄISCHE PATENTSCHRIFT

(11) **EP 0 648 671 B1**
(45) Veröffentlichungstag und Bekanntmachung des Hinweises auf die Patenterteilung: **27.12.1996**
(21) Anmeldenummer: 94114994.0
(22) Anmeldetag: 23.09.1994
(51) Int. Cl.: B64D 13/08

(54) **Kabinenumluftsystem zur Klimatisierung von Rumpfeinheiten eines Passagierflugzeuges**
Cabin air circulation system for the air conditioning of an aircraft passagers zones
Dispositif de ventilation de cabine pour la climatisation d'unités de fuselage d'un avion de passagers

(30) Priorität: 15.10.1993 DE 4335152
(43) Veröffentlichungstag der Anmeldung: 19.04.1995
(73) Patentinhaber: Daimler-Benz Aerospace Airbus Gesellschaft mit beschränkter Haftung, 21129 Hamburg (DE)
(72) Erfinder: Dechow, Martin, D-21129 Hamburg (DE); Scherer, Thomas, Dr., D-22587 Hamburg (DE)
(74) Vertreter: Hansmann, Dierk, Dipl.-Ing.

(56) Entgegenhaltungen:
- EP-A- 0 301 607
- FR-A- 2 532 408
- US-A- 4 786 294

## Beschreibung

Die Erfindung bezieht sich auf ein Kabinenumluftsystem zur Klimatisierung von Rumpfeinheiten eines Passagierflugzeuges. Mit ihr ist der Frischluftmengenstrom incl. die Druck-und Temperaturüberwachung für einen Passagierflugzeug - Druckrumpf regelbar und ein Kabinenluftrecycling realisiert.

Es sind Lösungen bekannt, bei denen dem Druckrumpf bekannter Flugzeugtypen in allen Boden- und Flugfällen ein konstanter Frischluftvolumenstrom zur Ventilation der Kabine, des Cockpits, der Elektronik- und Frachträume zugeführt wird. Die Luftqualität wird insbesondere in der Kabine und im Cockpit durch diesen Volumenstrom aufrechterhalten. Um die Temperatur und die Luftgeschwindigkeit in der Ventilationsluft für die Flugzeuginsassen angenehm zu gestalten, wird ein konstanter Luftstrom in der Art sogenannter Rezirkulationsluft der Frischluft beigemischt. Bei der Rezirkulationsluft handelt es sich um verbrauchte Kabinenluft, die wiederverwendet wird. Dabei werden die den Frischluftaufbereitungseinrichtungen (Klimapacks) zugeordneten Luftmengensteuerungsventile (Flow Control Valves) nach dem konstanten Volumenstrom (Bleed Air) geregelt. Nur Fehlerfalle können die Mengenströme verändern. Ausnahmen sind ein zusätzlicher Luftbedarf für eine Frachtraumbelüftung und ein sogenannter Economy - Mode für die Kabine, mit denen der Luftstrom auf einen anderen, dann aber wieder konstanten Wert eingestellt werden kann. Mit diesen Lösungen ist somit weitestgehend nur das Schalten in einen Economy-, Normal- und Maximum - Mode möglich. Im besonderen erfolgt die Regelung der Flugzeugklimatisierung derart, daß die Temperatur in der Kabine und im Cockpit durch die Auslaßtemperatur der Klimapacks und durch ein sogenanntes Trimmsystem geregelt wird. Mit der Auslaßtemperatur der Klimapacks wird die niedrigste aller benötigten Lufttemperaturen eingestellt. Durch Zumischung heißer Trimmluft aus den Triebwerken werden die Temperaturen für die anderen Zonen geregelt. Bei diesen Lösungen erfolgt nachteiligerweise nicht die Aufbereitung eines hohen Anteiles der verbrauchten Kabinenluft, da hier die Ventilation des Druckrumpfes auf eine Steuerung und Regelung des Luftvolumenstroms nach konstanten Luftströmen (Frisch- bzw. aufzubereitende Rezirkulationsluft) abgestimmt ist. Die externe Frischluftzufuhr geschieht nicht nach dem Aspekt der Ausgleichung der Leckagen; sie ist auf eine ausreichende Belüftung des Druckrumpfes mit hohem Frischluftanteil abgestellt, wodurch der Gesamtenergieverbrauch bzw. der Kraftstoffverbrauch des Systems entsprechend beansprucht wird.

Die Druckregelung des Druckrumpfes erfolgt nachteiligerweise unabhängig von der Frischluftmengen-und Temperaturregelung. Dabei dient der Luftstrom, der den Druckrumpf verlaßt, als Regelgröße. Steigt der Druck im Druckrumpf an, so wird der Luftstrom erhöht; sinkt dieser Druck, dann wird der Luftstrom entsprechend verringert.

Die Kabinenluftqualität im Passagier- und Personalbereich (Kabine und Cockpit) wird gegenwärtig nur durch den konstanten Frischluft- (Außenluft-) strom sichergestellt. Dabei korreliert die benötigte Frischluftmengezufuhr funktionell mit der geforderten Kabinenluftqualität in diesen Klimabereichen, wobei ein Anteil der Kabinenabluft durch einen Partikelfilter geführt und dann als Rezirkulationsluft der separat zugeführten Frischluft zur Ventilation zugeführt wird. Da die Kabinenluft in diesen Bereichen offenbar mit der Ausbreitung von Keimen, beispielsweise Bakterien und Viren (Krankheitserreger in der Altluft), und mit Geruchsstoffen, beispielsweise Humangeruchsstoffen, oder durch Speisengerüche ect. zusätzlich belastet wird, die durch an Bord eines Flugzeuges befindliche Insassen wesentlich beeinflußt und somit entscheidend verursacht wird, wirkt sich der Reinlichkeitsgrad einer solchermaßen verbrauchten Luft bei deutlicher Erhöhung des Rezirkulationsanteils an der Ventilation sehr ungünstig auf das Wohlbefinden aller Passagiere und incl. Crewmitglieder durch die schlecht und unzureichend gefilterte Rezirkulationsluft aus. Die derzeit installierten Filteranlagen an Bord eines Flugzeuges genügen bei deutlicher Erhöhung des Rezirkulationsanteils an der Ventilation nicht den Ansprüchen und können diesen ungünstigen Erscheinungen nicht abhelfen. Bei den heutigen bekannten Systemen wird die Rezirkulationsluft also nur durch einen Partikelfilter gereinigt, nicht aber wieder so aufbereitet, daß sie Frischluftqualität erreicht.

Außerdem beeinflußt der Kohlendioxidanteil in der Kabinenluft maßgeblich die Luftqualität, der ohne eine Adsorption bei deutlicher Erhöhung des Rezirkulationsanteils an der Ventilation auf unzulässig hohe Werte steigt. Eine aus der EP 0 301 607 bekannte Lösung offenbart hierzu eine Einrichtung und ein Verfahren zum Steuern bzw. Regeln der Ventilation eines unter Druck gesetzten umschlossenen Raumes in der Weise, daß sowohl der Druck wie auch die Kohlendioxidkonzentration räumlich auf einem bestimmten Niveau gehalten werden. Der genannte Raum wird hierbei in der vorher beschriebenen Weise klimatisiert, wobei ein Drucksensor das Druckniveau und ein Kohlendioxidsensor die Kohlendioxidkonzentration räumlich erfaßt. Die meßtechnisch aktuell überwachten Werte werden jeweils einer zuständigen Steuer- und Regeleinrichtung zugeleitet, die einen Soll- /Ist - Vergleich durchführt.

Das Ergebnis diese Vergleiches beeinflußt die Zuführung druckbehafteter Frischluft, die außerhalb des geschlossenen Raumes abgezapft wird, als auch das Raumdruckniveau. Die Frischluft wird dann mit einem Teil der verbrauchten Abluft des Raumes gemischt und diesem erneut zugeführt. Damit wird der Druck und die Kohlendioxidkonzentration in Abhängigkeit von dem einen als auch dem anderen automatisch auf einem vorbestimmten Niveau gehalten. Bei dieser Lösung ist die Ventilation der Kabine nur auf das Steuern und Regeln der Kohlendioxidkonzentration und des Raumdruckes abgestimmt, wobei beide Parameter voneinander abhängig entsprechend einem vorbestimmten Niveau automatisch verändert werden. Mit ihr besteht keine Möglichkeit, eine wünschenswerte temperierte und sauber klimatisierte Zuluft der Kabine zuzuführen, weil auf eine weitere Aufbereitung des Teiles der verbrauchten Abluft nach dem Aspekt der Befreiung von ihr anhaftenden Keimen (Viren und Bakterien), Gerüchen und sonstigen Verunreinigungen und auf eine angenehme Temperierung der die Kabine erreichenden Zuluft verzichtet wurde.

Die DE 865 358 offenbart eine weitere Lösung zum Steuern und Regeln der Ventilation eines umschlossenen Raumes. Eine Einrichtung realisiert mit einer Luftdusche das Zuführen eines Gemisches aus abgezogener und frischer Luft zu dem Raum. Mittels einer Kohlendioxidsteuer- und Regeleinrichtung, die mit einem Kohlendioxidsensor verbunden ist und auf diesen anspricht, wobei der Sensor die Kohlendioxidkonzentration im Raum überwacht, wird die außerhalb des Raumes abgesaugte Frischluftzuführ über ein Ventil in Abhängigkeit von der überwachten Konzentration gesteuert und geregelt. Die Lösung beachtet nicht die Aspekte der Druck-und Temperaturregelung; eine Abführung von Wärmelasten, die dem Raum möglicherweise anhaften, sowie ein auf die Beseitigung von Keimen, Gerüchen und anderen Verunreinigungen ausgerichtetes Kabinenrecycling erfolgt nicht.

Demzufolge liegt der Erfindung die Aufgabe zugrunde, ein gattungsgemäßes Kabinenumluftsystem derart zu gestalten, daß mit ihm bei Verringerung der externen Frischluftzufuhr in den Druckrumpf die Aufbereitung eines hohen Anteiles der im zu klimatisierenden Personenbereich verbrauchten Abluft erfolgt. Die Frischluftzuführ soll so gestaltet werden, daß mit ihr die Druckregelung des Druckrumpfes einbezogen die Druckhaltung, vor allem Repressurization im Sinkflug, sowie die Ausgleichung der Leckagen des Druckrumpfes und die Abführung des Großteiles der Wärmelast aus dem Druckrumpf möglich ist.

Das Kabinenluftrecycling soll die Aufrechterhaltung einer optimalen Luftqualität sichern, wonach die weitere Ausbreitung der in der Rezirkulationsluft (Recyclingluft) ansässigen Keime ( Viren und Bakterien), Geruchssubstanzen und sonstigen Verunreinigungen verhindert und deren Temperierung als auch die Adsorption des überschüssigen Kohlendioxidanteiles in der Kabinenluft realisiert wird. Die dem Frischluftmengenstrom zugeführte und so aufbereitete Rezirkulationsluft soll zur Erhöhung der niedrigen Luftfeuchtigkeit in der Kabine beitragen. Das Frischluftmengen- und Recyclingsystem soll als Gesamtsystem zur wesentlichen Kraftstoffeinsparung respektive zur Senkung des Gesamtenergieverbrauches als auch zur Sicherstellung der Luftqualität und - verhältnisse eines Passagierflugzeuges beitragen.

Diese Aufgabe für ein Kabinenumluftsystem zur Klimatisierung von Rumpfeinheiten eines Passagierflugzeuges, das den Frischluftmengenstrom inclusive die Druck- und Temperaturüberwachung für einen Druckrumpf regelt und ein Kabinenluftrecycling realisiert, mit einer Frischluftaufbereitungseinheit und einer Luftmischereinrichtung und einem letzterer nachgeordneten Klimabereich, welche luftstrombezogen in Reihe miteinander verbunden sind, bei der zwischen dem Eingang der Frischluftaufbereitungseinheit und einer ihr vorgeordneten Luftmengensteuerungsventileinheit eine luftstrombezogene Verbindung besteht, wobei am Eingang der Luftmengensteuerungsventileinheit eine Frischluft, die vorzugsweise eine von mindestens einem Triebwerk bezogene Zapfluft ist, anliegt, bei der eine Trimmluftsteuerungsventileinheit in die luftstrombezogene Verbindung zwischen der Luftmischereinrichtung und dem Klimabereich eingebunden ist, an deren Eingang ein Teil der Frischluft, die die Luftmengensteuerungsventileinheit zugeführt erhält, anliegt, bei der alle in einen Luftstrom einbezogene Einheiten und / oder Einrichtungen untereinander und / oder mit dem Klimabereich in Verbindung stehende Einheiten und Einrichtungen mittels Luftstromverbindungsleitungen verbunden sind, wobei der Klimabereich eine gewisse Leckkage besitzt, die einen Teil der in ihm verbrauchten Abluft nach außerhalb der Rumpfeinheit abführt, bei der alle leitenden Verbindungen zwischen den funktionell verknüpften Einheiten und / oder Einrichtungen und / oder dem Klimabereich, die vorzugsweise elektrisch leitend gestaltet sind, dem Informationsaustausch zugeordnet sind, wird dadurch gelöst, daß eine Partikel- und / oder Geruchsfiltereinheit, eine Lüftereinheit, eine Kohlendioxidadsorbereinheit und eine Wärmeaustauschereinheit in dieser Reihenfolge in den Luftstrom einbezogen und die Einheiten luftstrombezogen in Reihe miteinander verbunden sind, daß der Klimabereich ausgangsseitig mit dem Eingang der Partikel- und / oder Geruchsfiltereinheit luftstrombezogen verbunden ist, wobei letztere einen weiteren Teil der im Klimabereich verbrauchten Abluft als Rezirkulationsluft zugeführt erhält,
daß die mit einer Außenluft, die sich außerhalb des Passagierflugzeuges befindet, gespeiste Wärmeaustauschereinheit ausgangsseitig mit einem anderen Eingang der Luftmischereinrichtung luftstrombezogen verbunden ist, wobei letztere aufbereitete Rezirkulationsluft zugeführt bekommt, daß eine Kabinendruckregeleinrichtung, eine Klimaanlagenregeleinrichtung und eine Kabinenzonenregeleinrichtung leitend und funktionell in Reihe verbunden sind, wobei ein wechselseitiger Informationsaustausch zwischen diesen Elementen erfolgt, daß die Luftmengensteuerventileinheit mit der Kabinendruckregeleinrichtung und die Frischluftaufbereitungseinheit mit der Klimaanlagenregeleinrichtung und die Wärmeaustauschereinheit mit der Kabinenzonenregeleinrichtung leitend und funktionell verbunden ist, wobei ein wechselseitiger Informationsaustausch zwischen diesen Elementen stattfindet, daß jeweils ein Eingang der Kabinenzonenregeleinrichtung mit der Luftmischereinrichtung und mit einer funktionellen Schnittstelle, die der Luftstromverbindung zwischen der Luftmischereinrichtung und dem Klimabereich zugeordnet ist, und mit dem Klimabereich leitend verbunden ist, wobei die eingangsseitig mit der Kabinenzonenregeleinrichtung funktionell verbundenen Elemente letzterer einseitig gerichtete Informationen bereitstellen, daß jeweils ein Ausgang der Kabinenzonenregeleinrichtung mit der Trimmluftsteuerungsventileinheit und mit der Lüftereinheit leitend verbunden ist, wobei die ausgangsseitig mit der Kabinenzonenregeleinrichtung funktionell verbundenen Elemente von letzterer einseitig gerichtete Informationen erhalten.

Das Kabinenumluftsystem ist mit oder ohne Kohlendioxidadsorbereinheit ausgerüstet ist, wobei bei deren Fehlen die Lüftereinheit luftstrommäßig direkt mit der Wärmeaustauscheinheit verbunden ist.

Der Klimabereich kann in eine Passagierkabine und ein Cockpit geteilt sein, die beide getrennte klimatisierte Bereiche sind.

Die Passagierkabine und das Cockpit können luftstrombezogen getrennt mit der Luftmischereinrichtung verbunden sein, wobei die getrennten Luftstromverbindungen je eine funktionelle Schnittstelle aufweisen, die jeweils mit einem Eingang der Kabinenzonenregeleinrichtung leitfähig und funktionell verbunden ist.

Die Frischluftaufbereitungseinheit besteht vorzugsweise wenigstens aus zwei Frischluftaufbereitungseinrichtungen, die mit der Klimaanlagenregeleinrichtung leitend und funktionell verbunden sind, wobei ein wechselseitiger Informationsaustausch zwischen diesen Elementen besteht, und denen wenigstens zwei Luftmengensteuerventile, die zur Luftmengensteuerventileinheit gehören, luftstrommäßig vorgeordnet sind, an deren Eingänge separat Frischluft anliegt, und die leitungsmäßig mit der Kabinendruckregeleinrichtung funktionell verbunden sind, wobei ein wechselseitiger Informationsaustausch zwischen diesen Elementen stattfindet.

Die Trimmluftsteuerungsventileinheit besteht vorzugsweise wenigstens aus zwei Trimmluftsteuerungsventilen, die in die luftstrombezogene getrennte Verbindung zwischen der Luftmischereinrichtung und der Passagierkabine und / oder dem Cockpit eingebunden sind, wobei an deren Eingängen getrennt Trimmluft liegt, und mit jeweils einem Ausgang der Kabinenzonenregeleinrichtung leitfähig und funktionell verbunden sind, wobei letztere ausgangsseitig einseitig gerichtete Informationen bereitstellt.

Die leitenden Verbindungen können Kontrollschleifen sein, deren leitungsmäßige Verknüpfung innerhalb des Kabinenumluftsystemes, das ein Kabinenluft - Recycling System ist, den Informationsaustausch mit Kontrollfunktion zwischen den Elementen im Reiseflug - Zustand gewährt.

Die Partikel- und / oder Geruchsfiltereinheit, die Lüftereinheit, die Kohlendioxidadsorbereinheit und die Wärmeaustauschereinheit sind vorzugsweise aus mehreren funktionell gleichermaßen arbeitenden Einrichtungen zusammengesetzt, die zur betreffenden Einheit integriert sind.

Die Partikel- und / oder Geruchsfiltereinheit ist vorzugsweise zur Zurückhaltung von Bestandteilen aus der Rezirkulationsluft, vorzugsweise von Partikeln und Keimen, bei letzteren insbesondere von Bakterien und Viren, und weiterhin von Gerüchen und anderen Verunreinigungen geeignet.

Die Kohlendioxidadsorbereinheit ist vorzugsweise zur Zurückhaltung von Kohlendioxidbestandteilen aus der Rezirkulationsluft geeignet.

Die Kohlendioxidadsorbereinheit setzt sich vorzugsweise aus Feststofffiltern, vorzugsweise aus Fest - Amin - Filtern zusammen. Zu deren Regenerierung ist die Nutzung der Abwärme der Rezirkulationsluft, die in der Wärmeaustauschereinheit entsteht, vorgesehen.

Die durch die Erfindung erreichten Vorteile sind im wesentlichen darin zu sehen, daß mit dem Kabinenumluftsystem bei Verringerung der externen Frischluftzuführ in den Druckrumpf des Passagierflugzeuges die Aufbereitung eines hohen Anteiles der im zu klimatisierenden Personenbereich verbrauchten Abluft im Reiseflug - Mode erfolgt. Die Frischluftzufuhr erfolgt so, daß mit dem Kabinenumluftsystem die Druckregelung des Druckrumpfes einbezogen dessen Druckhaltung sowie der Ausgleich der Leckagen des Druckrumpfes und die Abführung des Großteiles der Wärmelast aus dem Druckrumpf möglich ist.

Das Kabinenluftrecycling sichert die Aufrechterhaltung einer optimalen Luftqualität, wonach die weitere Ausbreitung der in der Rezirkulationsluft (Recyclingluft) ansässigen Keime ( Viren und Bakterien), Geruchssubstanzen und sonstigen Verunreinigungen verhindert und deren Temperierung als auch die Adsorption des überschüssigen Kohlendioxidanteiles in der Kabinenluft realisiert wird. Die dem Frischluftmengenstrom zugeführte und so aufbereitete Rezirkulationsluft trägt zur Erhöhung der niedrigen Luftfeuchtigkeit in der Kabine bei. Das Frischluftmengen- und Recyclingsystem als Gesamtsystem schränkt wesentlich den Kraftstoffverbrauch respektive den Gesamtenergieverbrauch im Reiseflug - Mode ein. Es realisiert die benötigte(n) Luftqualität und - verhältnisse eines Passagierflugzeuges, wobei der hohe Reinheitsgrad der klimatisierten Luft sehr vorteilhaft wirkt.

Die Erfindung ist anhand der Zeichnungen dargestellt und in einem Ausführungsbeispiel näher beschrieben. Es zeigen
- Fig.1: die erfinderische Anordnung in einem Blockschaltbild;
- Fig.2: die spezielle Anordnung nach der Fig.1 ohne Kohlendioxidadsorbereinheit;
- Fig.3: die vereinfachte Darstellung des Druckrumpfes mit Teilwdarstellung des Umluftsystems (Frischluftmengen- und Recyclingsystem).

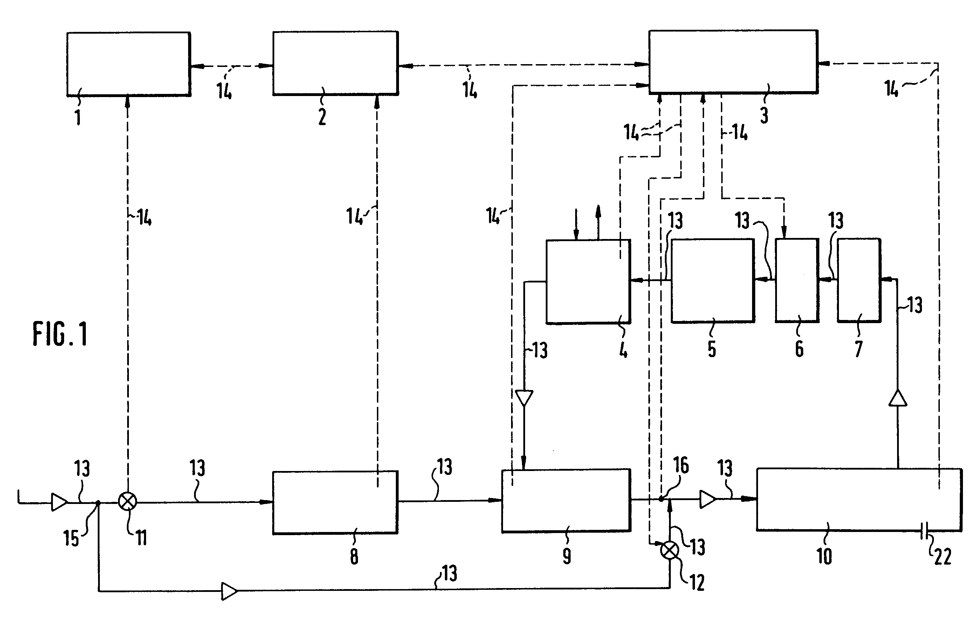

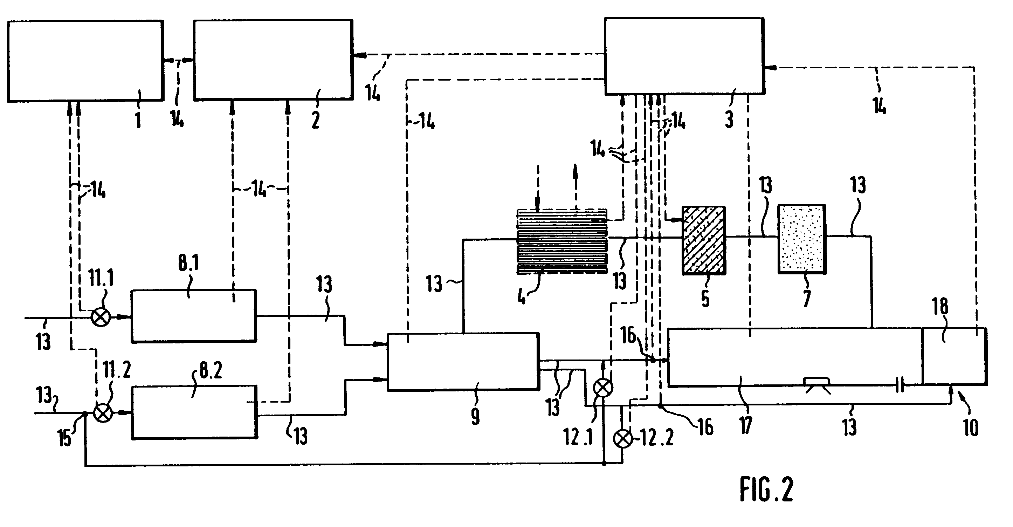

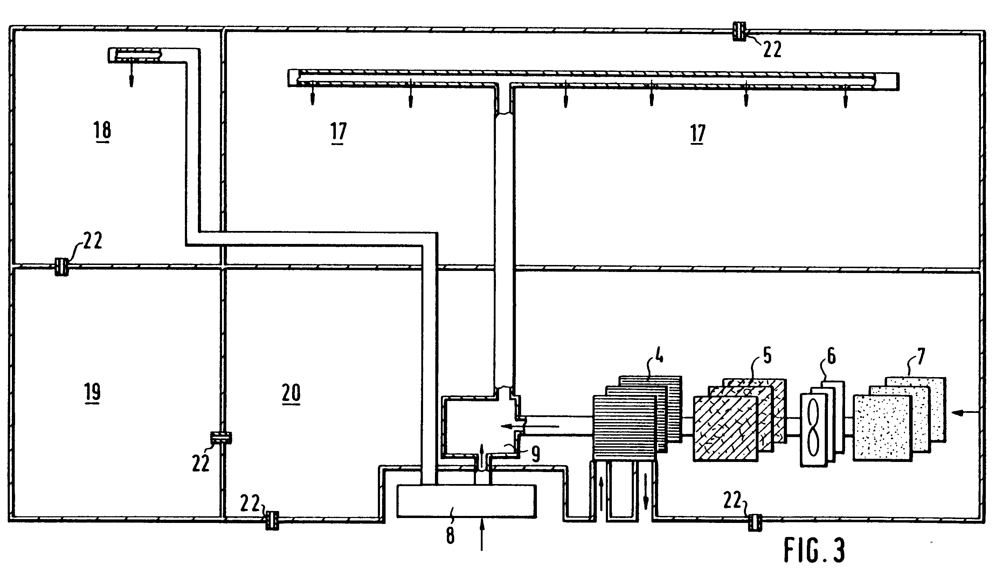

An einem Ausführungsbeispiel soll das erfinderische Kabinenumluftsystem näher erläutert werden. In der Fig. 1 ist das Kabinenumluftsystem zur Klimatisierung von Rumpfeinheiten eines Passagierflugzeuges in einem Blockschaltbild dargestellt, das sich in der Fig.2 in einer speziellen Anordnung ohne Kohlendioxidadsorber manifestiert. Die Fig.3 laßt den belüfteten Druckrumpf mit extern zugeführter Frischluft und intern aufbereiteter Rezirkulationsluft (Recyclingluft), die dem Klimabereich bzw. Personenbereich (Passagierbereich und Cockpit) gemischt als Zuluft erreichen, erkennen. Der Luftstrom aufbereiteter Frischluft, die die verbleibenden Gewerken des Druckrumpfes zugeführt erhalten, ist ebenso dargestellt.

Nach der Fig.1 besteht das Kabinenumluftsystem aus einer Frischluftaufbereitungseinheit 8 und einer Luftmischereinrichtung 9 und einem letzterer nachgeordneten Klimabereich 10, welche mittels Luftstromverbindungsleitungen 13 miteinander in Reihe verbunden sind. Zwischen dem Eingang der Frischluftaufbereitungseinheit 8 und einer ihr vorgeordneten Luftmengensteuerungsventileinheit 11 ist eine Verbindung mit einer Luftstromverbindungsleitung 13 realisiert. Am Eingang der Luftmengensteuerungsventileinheit 11 liegt extern abgezapfte Frischluft, die vorzugsweise von den Triebwerken des Flugzeuges als heiße Zapfluft bezogen wird, an. Eine Trimmluftsteuerungsventileinheit 12 ist über eine Luftstromverbindungsleitung 13 an die luftstrombezogene Verbindung zwischen der Luftmischereinrichtung 9 und dem Klimabereich 10 gekoppelt. An deren Eingang liegt ein Teil der abgezapften Frischluftmenge, die einer Schnittstelle 15 der an die Luftmengensteuerungsventileinheit 11 zuführenden Luftstromverbindungsleitung 13 entnommen wird, an. Der Klimabereich 10 ist als zu klimatisierender Personenbereich des Passagierflugzeuges zu verstehen; der sich nach Fig.2 im besonderen in eine getrennt zu klimatisierende Passagierkabine 17 und in ein Cockpit 18 aufteilt. Dieser Klimabereich 10 besitzt Leckkagen 22, die einen Teil der vorhandenen verbrauchten Abluft außerhalb der Rumpfeinheit abführt. Ein Teil der verbrauchten Abluft, der beispielgemäß bei bis zu etwa 85 Prozent der dem Recycling unterzogenen Abluft als Rezirkulationsluft liegt, wird über eine Luftstromverbindungsleitung 13 einer Kabinenluftrecyclingeinheit zugeführt. Diese Recyclingeinheit besteht aus einer Partikel- und / oder Geruchsfiltereinheit 7, einer Lüftereinheit 6, einer Kohlendioxidadsorbereinheit 5 und einer Wärmeaustauschereinheit 4, die in den Luftstrom einbezogen sind. Entsprechende Luftstromverbindungsleitungen 13 verbinden diese Einheiten luftstrombezogen miteinander in Reihe. Der Klimabereich 10 ist ausgangsseitig mit dem Eingang der Partikel- und / oder Geruchsfiltereinheit 7 luftstrombezogen verbunden. Die Partikel- und / oder Geruchsfiltereinheit 7 erhält den beispielgemäß genannten Kabinenabluftanteil der im Klimabereich 10 verbrauchten Luft als Rezirkulationsluft zugeführt. Die mit externer kühler Außenluft gespeiste Wärmeaustauschereinheit 4, die außerhalb des Passagierflugzeuges abgezapft wird, ist ausgangsseitig der Kabinenluftrecyclingeinheit über eine Luftstromverbindungsleitung 13 mit einem anderen Eingang der Luftmischereinrichtung 9 luftstrombezogen verbunden.

Letztere erhält dann die innerhalb der Kabinenluftrecyclingeinheit aufbereitete Rezirkulationsluft zugeführt. Die aufbereitete Recyclingluft, die
a) durch die entsprechenden Filter 7 von Bestandteilen aus der Rezirkulationsluft, vorzugsweise von Partikeln und Keimen, bei letzteren insbesondere von Bakterien und Viren, und weiterhin von Gerüchen und weiteren Schadstoffen (Verunreinigungen) befreit ist;
b) dann mittels der Lüftereinheit 6 der Kohlendioxidadsorbereinheit 5 zugeführt wird;
c) weiterhin dann mittels der Kohlendioxidadsorbereinheit 5 durch Adsorption des überschüssigen Kohlendioxides von zurückbehaltenen Kohlendioxidbestandteilen befreit wird, wobei eine Regenerierung der Kohlendioxidfilter, die beispielgemäß Fest - Amin - Filter sind, mittels der gewonnenen Abwärme der Rezirkulationsluft von der Wärmeaustauschereinheit 4 erfolgt;
d) darauf folgend mittels der Wärmeaustauschereinheit 4 durch dieser extern zugeführte kühle Außenluft auf ein klimaverträgliches temperiertes Wärmeniveau abgekühlt wird
erreicht so eine anspruchsvolle und auf hohem Niveau befindliche Luftqualität, die eine Gefährdung der Flugzeuginsassen im klimatisierten Personenbereich ausschließt. Die diesem Bereich zugeführte Zuluft, die aus gemischten Bestandteilen der in der Frischlufteinheit 8 auf ein angenehmes Maß klimatisierten Frischluft und der aufbereiteten Rezirkulationsluft besteht, wird vor ihrem Eintritt in den Klimabereich 10 mittels des genannten Zapfluftanteiles zusätzlich über die Trimmluftsteuerventileinheit 12 nachtemperiert.

Entsprechende Regeleinrichtungen 1, 2, 3 sind den / der / dem mittels Luftstromverbindungsleitung(en) 13 verbundenen Einheiten 4 bis 8, 11 bis 12, Einrichtung 9 und Klimabereich 10 des beschriebenen Luftstromsystemes zugeordnet, die die Ventilation des Frischluftmengenstromes inclusive die Belüftung für den Druckrumpf sowie die Temperaturregelung des Klimabereiches 10 und die Regelung des Kabinendruckes innerhalb des Druckrumpfes kontrollfähig überwachen. Dementsprechend verbinden Kontollschleifen 14, die leitende Verbindungen, vorzugsweise elektrisch leitend, sind, die genannten Elemente miteinander.

Eine Kabinendruckregeleinrichtung 1, eine Klimaanlagenregeleinrichtung 2 und eine Kabinenzonenregeleinrichtung 3 sind miteinander leitend und funktionell in Reihe verbunden. Zwischen ihnen erfolgt ein wechselseitiger Informationsaustausch. Weiterhin ist die Luftmengensteuerventileinheit 11 mit der Kabinendruckregeleinrichtung 1 und die Frischluftaufbereitungseinheit 8 mit der Klimaanlagenregeleinrichtung 2 und die Wärmeaustauschereinheit 4 mit der Kabinenzonenregeleinrichtung 3 leitend und funktionell verbunden. Zwischen diesen Elementen findet ebenfalls ein wechselseitiger Informationsaustausch statt.

Jeweils ein Eingang der Kabinenzonenregeleinrichtung 3 ist mit der Luftmischereinrichtung 9 und mit einer funktionellen Schnittstelle 16, die der Luftstromverbindung zwischen der Luftmischereinrichtung 9 und dem Klimabereich 10 zugeordnet ist, und mit dem Klimabereich 10 leitend verbunden. Die eingangsseitig mit der Kabinenzonenregeleinrichtung 3 funktionell verbundenen Elemente geben an diese einseitig gerichtete Informationen ab.

Ebenso ist jeweils ein Ausgang der Kabinenzonenregeleinrichtung 3 mit der Trimmluftsteuerungsventileinheit 12 und mit der Lüftereinheit 6 leitend verbunden. Die ausgangsseitig mit der Kabinenzonenregeleinrichtung 3 funktionell verbundenen Elemente erhalten von letzterer einseitig gerichtete Informationen.

Die einzelnen geschalteten Kontrollschleifen 13, die durch Signalleitungen belegt sind, dienen der Informationsübermittlung von elektrischen Stell- und Regelgrößen zwischen den einzelnen Elementen. Diese sprechen auf die ihnen übermittelen Signale an und gestalten den funktionellen Ablauf innerhalb der Steuer- und Regelkreise.

Eine speziell gestaltete Lösung gegenüber Fig.1 ist der Anordnung nach der Fig.2 entnehmbar. Die Anordnung ist mit ihrem Kabinenluft - Recyclingsystem im Reiseflugzustand eines Flugzeuges dargestellt. Diese Regelung der Flugzeugklimatisierung mit einem Kabinenluftrecyclingsystem folgt im wesentlichen der Darstellung des Kabinenumluftsystems nach der Fig.1, wobei letzteres ohne Kohlendioxidadsorbereinheit 5 dargestellt wird. Die Recyclingeinheit dieser Lösung kann aber ebenso mit einer Kohlendioxidadsorbereinheit 5 betrieben werden, wie das beispielgemäß nach Fig. 1 geschieht soll. Sie besteht vorzugsweise aus mehreren Fest - Amin - Filtern, die die Zurückhaltung von Kohlendioxidbestandteilen realisieren.

Die Abwärme der Rezirkulationsluft (aus der Wärmeaustauschereinheit 5) soll später zur Regenerierung der genannten Filter genutzt werden. Im weiteren besteht hier beispielgemäß die Frischluftaufbereitungseinheit 8 aus zwei Frischluftaufbereitungseinrichtungen 8.1, 8.2 (Packs), die Luftmengensteuerungsventileinheit 11 aus zwei Luftmengensteuerungsventilen 11.1, 11.2 und die Trimmluftsteuerungsventileinheit 12 aus zwei Luftmengensteuerungsventilen 12.1, 12.2. Die beiden Luftmengensteuerventile 11.1, 11.2 sind mit den entsprechenden Frischluftaufbereitungseinrichtungen 8.1, 8.2 (Klimapacks) luftstrommäßig vorgeordnet und über Luftstromverbindungsleitungen 13 verbunden. Die Frischluftaufbereitungseinrichtungen 8.1, 8.2 sind mittels nachgeordneter Luftstromverbindungsleitungen 13 an die Mischereinrichtung 9 angeschlossen. Letztere versorgt eine Passagierkabine 17 und ein Cockpit 18 luftstrombezogen getrennt über zwei Luftstromverbindungsleitungen 13 mit gemischter Luft (Zuluft), die in der bereits beschriebenen Weise nach der Fig.1 aus der aufbereiteten Rezirkulationsluft der Kabinenluftrecyclingeinheit und der den Luftmengensteuerungsventilen 11.1, 11.2 zugeführten Frischluft zusammengesetzt ist. Beide Luftmengen werden in der Mischereinheit 9 zusammengeführt und gemischt. Der Klimabereich 10 ist beispielgemäß in eine Passagierkabine 17 und ein Cockpit 18 geteilt, die beide getrennte klimatisierte Bereiche sind. Die Versorgung des Cockpits 18 mit klimatisierter Frischluft von einem der beider Klimapacks 8.1 oder 8.2 ist variantenmäßig ebenfalls möglich, wobei eine die beiden Bereiche verbindende Luftstromverbindungsleitung 13 anzuordnen ist. Die beiden Trimmluftsteuerungsventile 12.1, 12.2, die in die luftstrombezogene getrennte Verbindung zwischen der Luftmischereinrichtung 9 und der Passagierkabine 17 und dem Cockpit 18 eingebunden sind, sind eingangsseitig mit Trimmluft belegt. Diese Trimmluft wird als ein Teil der extern gezapften Frischluft zum Trimmen der die Mischereinheit 9 verlassenden Zuluft benutzt. Das geschieht über zwei Luftstromverbindungsleitungen 13, die die Ausgänge der Trimmluftventile 12.1, 12.2 mit den die Zuluft führenden Luftbrücken verbindet. Der Klimabereich 10 ist in der Fig.2 als geschlossener klimatisierter Bereich zu verstehen, der nur durch die Leckagen entsprechende Luftverluste besitzt.

Die Anbindung der Kabinenluftrecyclingeinheit an den Klimabereich 10 und an die Mischereinheit 9, die aus den in Reihe geschalteten Einheiten 4, 6, 7 zusammengesetzt ist, erfolgt gleichermaßen der Darstellung nach Fig.1; ebenso erfolgt die Anordnung der Regeleinrichtungen 1, 2, 3 zur Steuerung und Regelung der Luftmengenströme incl. des Recyclings nach dieser Darstellung. Die Kontrollschleifen 13 zur Informationsübermittlung der elektrischen Stell- und Regelgrößen sind entsprechend den einzelnen Elementen zugeschalten.

Danach sind die Kabinendruckregeleinrichtung 1, die Klimaanlagenregeleinrichtung 2 und die Kabinenzonenregeleinrichtung 3 miteinander leitend und funktionell in Reihe verbunden, wobei ein wechselseitiger Informationsaustausch zwischen diesen Elementen erfolgt. Weiterhin besteht eine leitungsmäßige funktionelle Verbindung zwischen den zwei Luftmengensteuerventile 11.1, 11.2 und der Kabinendruckregeleinrichtung 1, wobei letztere ausgangsseitig diesen Ventilen 11.1, 11.2 entsprechende Informationen zuführt. Die beiden Frischluftaufbereitungseinheiten 8.1, 8.2 sind mittel ihrer Meß- und Steuerelemente mit der Klimaanlagenregeleinrichtung 2 ebenso leitungsmäßig funktionell verbunden. Zwischen diesen Elementen 8.1, 8.2, 2 erfolgt ein wechselseitiger Informationsaustausch. Die zwei Trimmluftsteuerungsventile 12.1, 12.2, die in die luftstrombezogene getrennte Verbindung zwischen der Luftmischereinrichtung 9 und der Passagierkabine 17 und dem Cockpit 18 eingebunden sind, wobei an deren Eingänge getrennt Trimmluft liegt, sind mit jeweils einem Ausgang der Kabinenzonenregeleinrichtung 3 leitfähig funktionell verbunden. Letztere stellt diesen Ventilen 12.1, 12.2 ausgangsseitig entsprechende Informationen bereit. Jeweils eine funktionelle Schnittstelle 16, die den getrennten Luftstromverbindungen 13 zwischen der Luftmischereinrichtung 9 und der Passagierkabine 17 bzw. dem Cockpit 18 zugeordnet ist, besitzt einen leitungsmäßigen funktionellen Anschluß an zwei Eingänge der Kabinenzonenregeleinrichtung 3, wobei die Informationsabgabe der Schnittstellen 16 einseitig an letztere geschieht. Zwischen der Kabinenzonenregeleinrichtung 3 und der Wärmeaustauschereinheit 4 besteht weiterhin eine leitfähige funktionelle Verbindung. Der Informationsaustausch zwischen beiden Elementen ist wechselseitig. Die Lüftereinheit 6 ist an die Kabinenzonenregeleinrichtung 3 angeschlossen. Letztere stellt der Lüftereinheit 6 einseitig Informationen bereit. Ebenso ist die Kabinenzonenregeleinrichtung 3 über Kontrollschleifenverbindungen 14 an geeignete informationserfassende Elemente der Mischereinrichtung 9, der Passagierkabine 17 und des Cockpits 18 angeschlossen, die von diesen entsprechende meßtechnisch ermittelte Zustandsinformationen übermittelt erhält.

Die Fig.3 vermittelt eine mögliche Konfiguration der Gestaltung des Kabinenluft - Recyclingsystems innerhalb eines Passagierflugzeuges. Die Luftströme erreichen die Passagierkabine 17 und das Cockpit 18 in der bereits in den Figuren 1 und 2 geschilderten Art und Weise. Der figurlich im Ganzen dargestellte druckbelüftete Druckrumpf läßt in seiner Darstellung erkennen, daß hier im besonderen das Cockpit 18 mit klimatisierter Frischluft der Klimapacks 8.1 oder 8.2 versorgt wird.

Diese Frischluft erreicht mit einer Durchdringung von Leckagen 22 den Elektronik- / Elektrotechnikbereich 19 und dann den Frachtbereich 20. Sie verläßt letzteren Bereich entweder über ein Auslaßventil 21 oder über eine Leckage 22 und dring so aus dem Druckrumpf nach außen. Die bildliche Darstellung vermittelt, daß die Partikel- und / oder Geruchsfiltereinheit 7, die Lüftereinheit 6, die Kohlendioxidadsorbereinheit 5 und die Wärmeaustauschereinheit 4, die zusammen verbunden zur Kabinenrecyclingeinheit integriert sind, in der Praxis aus mehreren ihnen jeweils zugeordneten funktionell gleichermaßen arbeitenden Einrichtungen bestehen. Deren Anzahl je Einheit korrespondiert mit der Größe des Flugzeuges bzw. mit der Anzahl der Insassen.

Die beispielgemäßen Lösungen diese teilgeschlossenen Systems demonstrieren, das die Zufuhr von Frischluft nicht mehr primär der Aufrechterhaltung der Luftqualität in der Flugzeugkabine, sondern dem Ausgleich von Leckagen im Druckrumpf dienen. Dabei wird die Frischluftzufuhr nur zum Ersatz von Rumpfleckagen benötigt. Die Luftqualität im Bereich: Passagierkabine 17 und Cockpit 18 wird durch ein Filtersystem 7 aufrecht erhalten. Dabei wird die verbrauchte Kabinenluft wieder aufbereitet. Das Recyclingsystem ist mit seinen Filtern 7 in der Lage, Partikel und Keime (Bakterien und Viren), Gerüche, Kohlendioxid und andere Verunreinigungen aus der Kabinenluft zurückzuhalten. Mit dem Kabinenluftrecyclingsystem werden die Luftmengensteuerungsventile 11.1 und / oder 11.2 (FCV) kennzeichnend so geregelt, daß
- der Ausgleich der Leckageverluste im Druckrumpf;
- die Druckhaltung, vor allem Repressurization im Sinkflug;
- der Abtransport eines Großteiles der Wärmelasten:
- ein minimaler Frischluftstrom zur Dimensionierung der Filterwirkungsgrade
realisierbar wird. Nach diesen Aspekten ist die Regelung der Klimapacks 8.1, 8.2 und das Kabinendruckhaltungssystem (CPCS) 1 ausgerichtet. Die Druckregelung wird zumindest zeitweise durch die FCV wahrgenommen. Dabei wird der Druck im Rumpf (nicht mehr über den Luftstrom, der den Rumpf verlaßt, sondern) durch die Frischluftzufuhr geregelt. Die Frischluftzuführ wird zur Stellgröße für die Druckregelung.

Die Temperaturregelung wird durch die seperaten Warmetauscher 4 in der Rezirkulationsluft (Recyclingluft) durchgeführt. Als Kühlmedium dient, ähnlich der Verwendung bei den Klimapacks, die extern zugeführte Außenluft (RAM - Luft). Die Regenerierung der Kohlendioxidfilter, beispielsweise der Fest - Amin - Filter, erfolgt mit Hilfe der Abwärme der Rezirkulationsluft. Diese Maßnahme verringert die Energieaufnahme des Gesamtsystems.

Die genannten Anforderungen werden durch die Pack- und Druck- und Temperaturregelung des Kabinenumluftsystems realisiert, deren Controller 1, 2, 3 aufeinander abgestimmt sind.

Das lösungsgemäße Kabinenluftrecyclingsystem wird nur vollständig im Reiseflug - Mode betrieben, da es am Boden Fälle gibt, bei denen die im Passagierflugzeug anfallenden Wärmelasten aufgrund des geringen Frischluftstromes nicht abtransportiert sind. Das Filtersystem ist ebenso mit bekannten Klimaregelungen kompatibel betreibbar.

## Patentansprüche

1. Kabinenumluftsystem zur Klimatisierung von Rumpfeinheiten eine Passagierflugzeuges, das den Frischluftmengenstrom inclusive die Druck- und Temperaturüberwachung für einen Druckrumpf regelt und ein Kabinenluftrecycling realisiert, mit einer Frischluftaufbereitungseinheit (8) und einer Luftmischereinrichtung (9) und einem letzterer nachgeordneten Klimabereich (10), welche luftstrombezogen in Reihe miteinander verbunden sind, bei der zwischen dem Eingang der Frischluftaufbereitungseinheit (8) und einer ihr vorgeordneten Luftmengensteuerungsventileinheit (11) eine luftstrombezogene Verbindung besteht, wobei am Eingang der Luftmengensteuerungsventileinheit (11) eine Frischluft, die vorzugsweise eine von mindestens einem Triebwerk bezogene Zapfluft ist, anliegt, bei der eine Trimmluftsteuerungsventileinheit (12) in die luftstrombezogene Verbindung zwischen der Luftmischereinrichtung (9) und dem Klimabereich (10) eingebunden ist, an deren Eingang ein Teil der Frischluft, die die Luftmengensteuerungsventileinheit (11) zugeführt erhält, anliegt, bei der alle in einen Luftstrom einbezogene Einheiten und / oder Einrichtungen untereinander und / oder mit dem Klimabereich (10) in Verbindung stehende Einheiten und Einrichtungen mittels Luftstromverbindungsleitungen (13) verbunden sind, wobei der Klimabereich (10) eine gewisse Leckkage (22) besitzt, die einen Teil der in ihm verbrauchten Abluft nach außerhalb der Rumpfeinheit abführt, bei der alle leitenden Verbindungen zwischen den funktionell verknüpften Einheiten und / oder Einrichtungen und / oder dem Klimabereich (10), die vorzugsweise elektrisch leitend gestaltet sind, dem Informationsaustausch zugeordnet sind, **gekennzeichnet dadurch**, daß
- eine Partikel- und / oder Geruchsfiltereinheit (7), eine Lüftereinheit (6), eine Kohlendioxidadsorbereinheit (5) und eine Wärmeaustauschereinheit (4) in den Luftsrom einbezogen und die Einheiten luftstrombezogen in Reihe miteinander verbunden sind,
- der Klimabereich (10) ausgangsseitig mit dem Eingang der Partikel- und / oder Geruchsfiltereinheit (7) luftstrombezogen verbunden ist, wobei letztere einen weiteren Teil der im Klimabereich (10) verbrauchten Abluft als Rezirkulationsluft zugeführt erhält,
- die mit einer Außenluft, die sich außerhalb des Passagierflugzeuges befindet, gespeiste Wärmeaustauschereinheit (4) ausgangsseitig mit einem anderen Eingang der Luftmischereinrichtung (9) luftstrombezogen verbunden ist, wobei letztere aufbereitete Rezirkulationsluft zugeführt bekommt,
- eine Kabinendruckregeleinrichtung (1), eine Klimaanlagenregeleinrichtung (2) und eine Kabinenzonenregeleinrichtung (3) leitend und funktionell in Reihe verbunden sind, wobei ein wechselseitiger Informationsaustausch zwischen diesen Elementen erfolgt,
- die Luftmengensteuerventileinheit (11) mit der Kabinendruckregeleinrichtung (1) und die Frischluftaufbereitungseinheit (8) mit der Klimaanlagenregeleinrichtung (2) und die Wärmeaustauschereinheit (4) mit der Kabinenzonenregeleinrichtung (3) leitend und funktionell verbunden ist, wobei ein wechselseitiger Informationsaustausch zwischen diesen Elementen stattfindet,
- jeweils ein Eingang der Kabinenzonenregeleinrichtung (3) mit der Luftmischereinrichtung (9) und mit einer funktionellen Schnittstelle (16), die der Luftstromverbindung zwischen der Luftmischereinrichtung (9) und dem Klimabereich (10) zugeordnet ist, und mit dem Klimabereich (10) leitend verbunden ist, wobei die eingangsseitig mit der Kabinenzonenregeleinrichtung (3) funktionell verbundenen Elemente letzterer einseitig gerichtete Informationen bereitstellen,
- jeweils ein Ausgang der Kabinenzonenregeleinrichtung (3) mit der Trimmluftsteuerungsventileinheit (12) und mit der Lüftereinheit (6) leitend verbunden ist, wobei die ausgangsseitig mit der Kabinenzonenregeleinrichtung (3) funktionell verbundenen Elemente von letzterer einseitig gerichtete Informationen erhalten.

2. Kabinenumluftsystem zur Klimatisierung von Rumpfeinheiten eines Passagierflugzeuges nach Anspruch 1, **gekennzeichnet dadurch**, daß es mit oder ohne Kohlendioxidadsorbereinheit (5) ausgerüstet ist, wobei bei deren Fehlen die Lüftereinheit (6) luftstrommäßig direkt mit der Wärmeaustauscheinheit (4) verbunden ist.

3. Kabinenumluftsystem zur Klimatisierung von Rumpfeinheiten eines Passagierflugzeuges nach Anspruch 1, **gekennzeichnet dadurch**, daß der Klimabereich (10) in eine Passagierkabine (17) und ein Cockpit (18) geteilt ist, die beide getrennte klimatisierte Bereiche sind.

4. Kabinenumluftsystem zur Klimatisierung von Rumpfeinheiten eines Passagierflugzeuges nach Anspruch 3, **gekennzeichnet dadurch**, daß die Passagierkabine (17) und das Cockpit (18) luftstrombezogen getrennt mit der Luftmischereinrichtung (9) verbunden sind, wobei die getrennten Luftstromverbindungen je eine funktionelle Schnittstelle (16) aufweisen, die jeweils mit einem Eingang der Kabinenzonenregeleinrichtung (3) leitfähige und funktionell verbunden ist.

5. Kabinenumluftsystem zur Klimatisierung von Rumpfeinheiten eines Passagierflugzeuges nach Anspruch 1, **gekennzeichnet dadurch**, daß die Frischluftaufbereitungseinheit (8) wenigstens aus zwei Frischluftaufbereitungseinrichtungen (8.1; 8.2) besteht, die mit der Klimaanlagenregeleinrichtung (2) leitend und funktionell verbunden sind, wobei ein wechselseitiger Informationsaustausch zwischen diesen Elementen besteht, und denen wenigstens zwei Luftmengensteuerventile (11.1; 11.2), die zur Luftmengensteuerventileinheit (11) gehören, luftstrommäßig vorgeordnet sind, an deren Eingänge separat Frischluft anliegt, und die leitungsmäßig mit der Kabinendruckregeleinrichtung (1) funktionell verbunden sind, wobei ein wechselseitiger Informationsaustausch zwischen diesen Elementen stattfindet.

6. Kabinenumluftsystem zur Klimatisierung von Rumpfeinheiten eines Passagierflugzeuges nach den Ansprüchen 1 und 4, **gekennzeichnet dadurch**, daß die Trimmluftsteuerungsventileinheit (12) wenigstens aus zwei Trimmluftsteuerungsventilen (12.1; 12.2) besteht, die in die luftstrombezogene getrennte Verbindung zwischen der Luftmischereinrichtung (9) und der Passagierkabine (17) und / oder dem Cockpit (18) eingebunden sind, wobei an deren Eingängen getrennt Trimmluft liegt, und mit jeweils einem Ausgang der Kabinenzonenregeleinrichtung (3) leitfähig und funktionell verbunden sind, wobei letztere ausgangsseitig einseitig gerichtete Informationen bereitstellt.

7. Kabinenumluftsystem zur Klimatisierung von Rumpfeinheiten eines Passagierflugzeuges nach Anspruch 1, **gekennzeichnet dadurch**, daß die leitenden Verbindungen Kontrollschleifen sind, deren leitungsmäßige Verknüpfung innerhalb des Kabinenumluftsystemes, das ein Kabinenluft - Recycling System ist, den Informationsaustausch mit Kontrollfunktion zwischen den Elementen im Reiseflug - Zustand gewährt.

8. Kabinenumluftsystem zur Klimatisierung von Rumpfeinheiten eines Passagierflugzeuges nach Anspruch 1, **gekennzeichnet dadurch**, daß die Partikel- und / oder Geruchsfiltereinheit (7), die Lüftereinheit (6), die Kohlendioxidadsorbereinheit (5) und die Wärmeaustauschereinheit (4) aus mehreren funktionell gleichermaßen arbeitenden Einrichtungen zusammengesetzt ist, die zur betreffenden Einheit integriert sind.

9. Kabinenumluftsystem zur Klimatisierung von Rumpfeinheiten eines Passagierflugzeuges nach Anspruch 1, **gekennzeichnet dadurch**, daß die Partikel- und / oder Geruchsfiltereinheit (7) zur Zurückhaltung von Bestandteilen aus der Rezirkulationsluft, vorzugsweise von Partikeln und Keimen, bei letzteren insbesondere von Bakterien und Viren, und weiterhin von Gerüchen und anderen Verunreinigungen geeignet ist.

10. Kabinenumluftsystem zur Klimatisierung von Rumpfeinheiten eines Passagierflugzeuges nach Anspruch 1, **gekennzeichnet dadurch**, daß die Kohlendioxidadsorbereinheit (5) zur Zurückhaltung von Kohlendioxidbestandteilen aus der Rezirkulationsluft geeignet und aus Feststofffiltern, vorzugsweise aus Fest - Amin - Filtern, zusammengesetzt ist, wobei deren Regenerierung mittels Nutzung der Abwärme der Rezirkulationsluft vorgesehen ist.

## Claims

1. Cabin air recirculating system for air conditioning fuselage units of a passenger aircraft, which system controls the fresh air flow including monitoring of the pressure and temperature for a pressurised fuselage and recycles cabin air, with a fresh air preparation unit (8), an air mixer arrangement (9) and an air conditioning zone (10) arranged after the latter which are connected to one another in series for airflow purposes, wherein there is an airflow-related connection between the inlet of the fresh air preparation unit (8) and a flow control valve unit (11) arranged before it, wherein fresh air which is preferably bleed air obtained from at least one engine is present at the inlet of the flow control valve unit (11), wherein a trim air control valve unit (12) is incorporated into the airflow-related connection between the air mixer arrangement (9) and the air conditioning zone (10), at the inlet of which is present a proportion of the fresh air delivered to the airflow control valve unit (11), wherein all units and/or arrangements included in an airflow are connected to one another and/or to units and arrangements connected to the air conditioning zone (10) by means of airflow connecting lines (13), wherein the air conditioning zone (10) has a certain leakage (22) which leads off a proportion of the exhaust air used therein to the exterior of the fuselage unit, wherein all conductive connections between the functionally connected units and/or arrangements and/or the air conditioning zone (10), which are preferably electrically conductive, are associated with the information exchange, characterised in that
- a particle and/or odour filter unit (7), a fan unit (6), a carbon dioxide adsorber unit (5) and a heat exchanger unit (4) are included in the airflow and the units are connected to one another in series for airflow purposes,
- on the outlet side the air conditioning zone (10) is connected for airflow purposes to the inlet of the particle and/or odour filter unit (7), a further proportion of the exhaust air used in the air conditioning zone (10) being delivered as recirculated air to the filter unit,
- the heat exchanger unit (4) which is supplied with outside air from outside the passenger aircraft is connected on the outlet side to another inlet of the air mixer arrangement (9) for airflow purposes, the latter receiving prepared recirculated air,
- a cabin pressure control arrangement (1), an air conditioning control arrangement (2) and a cabin zone control arrangement (3) are conductively and functionally connected in series, a reciprocal exchange of information taking place between these elements,
- the flow control valve unit (11) is conductively and functionally connected to the cabin pressure control arrangement (1), the fresh air preparation unit (8) is conductively and functionally connected to the air conditioning control arrangement (2) and the heat exchanger unit (4) is conductively and functionally connected to the cabin zone control arrangement (3), a reciprocal exchange of information taking place between these elements,
- in each case an inlet of the cabin zone control arrangement (3) is conductively connected to the air mixer arrangement (9) and to a functional interface (16), which is associated with the airflow connection between the air mixer arrangement (9) and the air conditioning zone (10), and to the air conditioning zone (10), wherein the elements which are functionally connected on the inlet side to the cabin zone control arrangement (3) make available information which is unidirectionally supplied to the latter,
- in each case an outlet of the cabin zone control arrangement (3) is conductively connected to the trim air control valve unit (12) and to the fan unit (6), wherein the elements which are functionally connected on the outlet side to the cabin zone control arrangement (3) receive unidirectional information from the latter.

2. Cabin air recirculating system for air conditioning fuselage units of a passenger aircraft according to Claim 1, characterised in that it is equipped with or without a carbon dioxide adsorber unit (5), wherein in the absence of such a unit the fan unit (6) is connected directly in terms of airflow to the heat exchanger unit (4).

3. Cabin air recirculating system for air conditioning fuselage units of a passenger aircraft according to Claim 1, characterised in that the air conditioning zone (10) is divided into a passenger cabin (17) and a cockpit (18) which are both separately air conditioned zones.

4. Cabin air recirculating system for air conditioning fuselage units of a passenger aircraft according to Claim 3, characterised in that the passenger cabin (17) and the cockpit (18) are separately connected to the air mixer arrangement (9) for airflow purposes, the separate airflow connections each having a functional interface (16) which is in each case conductively and functionally connected to the inlet of the cabin zone control arrangement (3).

5. Cabin air recirculating system for air conditioning fuselage units of a passenger aircraft according to Claim 1, characterised in that the fresh air preparation unit (8) consists at least of two fresh air preparation arrangements (8.1; 8.2) which are conductively and functionally connected to the air conditioning control arrangement (2), so that there is a reciprocal exchange of information between these elements, and two airflow control valves (11.1; 11.2) belonging to the airflow control valve unit (11) and having fresh air present separately at their inlets are arranged before the fresh air preparation arrangements in airflow terms and are functionally connected in terms of lines to the cabin pressure control arrangement (1) so that a reciprocal exchange of information takes place between these elements.

6. Cabin air recirculating system for air conditioning fuselage units of a passenger aircraft according to Claims 1 and 4, characterised in that the trim air control valve unit (12) consists of at least two trim air control valves (12.1; 12.2) which are incorporated into the connection, which is separate for airflow purposes, between the air mixer arrangement (9) and the passenger cabin (17) and/or the cockpit (18), trim air being present separately at the inlets thereof, and are conductively and functionally connected in each case to an outlet of the cabin zone control arrangement (3), the latter making unidirectional information available on the outlet side.

7. Cabin air recirculating system for air conditioning fuselage units of a passenger aircraft according to Claim 1, characterised in that the conductive connections are control loops, the line connection of which within the cabin recirculating air system, which is a cabin air recycling system, ensures the exchange of information with control function between the elements during cruising.

8. Cabin air recirculating system for air conditioning fuselage units of a passenger aircraft according to Claim 1, characterised in that the particle and/or odour filter unit (7), the fan unit (6), the carbon dioxide adsorber unit (5) and the heat exchanger unit (4) are composed of a plurality of arrangements which operate in the same way and are integrated into the unit concerned.

9. Cabin air recirculating system for air conditioning fuselage units of a passenger aircraft according to Claim 1, characterised in that the particle and/or odour filter unit (7) is adapted to retain constituents of the recirculated air, preferably particles and germs, in the case of the latter in particular bacteria and viruses, and also odours and other pollutants.

10. Cabin air recirculating system for air conditioning fuselage units of a passenger aircraft according to Claim 1, characterised in that the carbon dioxide adsorber unit (5) is adapted to retain carbon dioxide constituents from the recirculated air and is composed of solids filters, preferably solid-amine filters, regeneration thereof being provided by means of utilisation of the waste heat from the recirculated air.

## Revendications

1. Système de ventilation de cabine pour la climatisation d'unités de fuselage d'un avion de passagers, qui règle le flux massique d'air frais ainsi que le contrôle de la pression et de la température pour un fuselage sous pression et réalise un recyclage de l'air en cabine, pourvu d'une unité de préparation d'air frais (8) et d'un dispositif mélangeur d'air (9) et d'une zone de conditionnement d'air (10) placée en aval de ce dernier, lesquels sont connectés l'un à l'autre en ligne en fonction de l'écoulement d'air, dans le cas de laquelle une connexion liée à l'écoulement d'air existe entre l'entrée de l'unité de préparation d'air frais (8) et une unité à soupape de commande des quantités d'air (11) placée en amont de celle-ci, à l'entrée de l'unité à soupape de commande des quantités d'air (11) se trouvant de l'air frais, qui constitue préférentiellement un air de distribution lié par au moins un groupe motopropulseur, dans laquelle une unité à soupape de commande de l'air de compensation (12) est insérée dans la connexion liée à l'écoulement d'air entre le dispositif mélangeur d'air (9) et la zone de conditionnement d'air (10), à l'entrée de laquelle se trouve une partie de l'air frais amené à l'unité à soupape de commande des quantités d'air (11), dans laquelle tous les dispositifs et/ou unités intégrés dans un écoulement d'air se trouvent en connexion réciproque et/ou les unités et dispositifs reliés à la zone de conditionnement d'air (10) sont connectés au moyen de conduites de raccordement pour l'écoulement d'air, où la zone de conditionnement d'air (10) présente une certaine fuite (22) qui évacue une partie de l'air d'évacuation consommé dans celle-ci vers l'extérieur de l'unité de fuselage, dans laquelle toutes les connexions conductrices entre les unités et/ou dispositifs liés de façon fonctionnelle et/ou la zone de conditionnement d'air (10), qui sont préférentiellement électroconducteurs, sont associés à un échange d'informations, **caractérisé en ce que**,
- une unité de filtrage des particules et/ou des odeurs (7), une unité de ventilation (6), une unité d'absorption du dioxyde de carbone (5) et une unité d'échange thermique (4) sont intégrées à l'écoulement d'air et en ce que les unités sont connectées l'une à l'autre en ligne en fonction de l'écoulement d'air,
- la zone de conditionnement d'air (10) côté sortie est connectée en fonction de l'écoulement d'air à l'entrée de l'unité de filtrage des particules et/ou des odeurs (7), cette dernière recevant une autre partie de l'air d'évacuation consommé dans la zone de conditionnement d'air comme air de recirculation,
- l'unité d'échange thermique (4) stockant l'air extérieur qui se trouve à l'extérieur de l'avion de passagers est connectée côté sortie à une autre entrée du dispositif mélangeur d'air (9) en fonction de l'écoulement d'air, ledit dispositif recevant en retour l'air de recirculation préparé,
- un dispositif de réglage de la pression en cabine (1), un dispositif de réglage de l'installation de conditionnement d'air (2) et un dispositif de réglage des zones de la cabine (3) sont connectés en ligne de façon conductrice et fonctionnelle, un échange mutuel d'informations intervenant entre lesdits éléments,
- l'unité à soupape de commande des quantités d'air (11) est reliée de façon conductrice et fonctionnelle au dispositif de réglage de la pression en cabine (1), l'unité de préparation d'air frais (8) est connectée de la même manière au dispositif de réglage de l'installation de conditionnement d'air (2) de même que l'unité d'échange thermique (4) au dispositif de réglage des zones de la cabine (3), un échange mutuel d'informations ayant lieu entre ces éléments,
- une entrée du dispositif de réglage des zones de la cabine (3) est reliée de façon conductrice au dispositif mélangeur d'air (9) et à un point de coupe fonctionnel (16) qui est associé à la connexion d'écoulement d'air entre le dispositif mélangeur d'air (9) et la zone de conditionnement d'air (10), de même qu'à la zone de conditionnement d'air (10), les éléments reliés de façon fonctionnelle côté entrée au dispositif de réglage des zones de la cabine (3) préparant les informations dirigées unilatéralement,
- une sortie du dispositif de réglage des zones de la cabine (3) est connectée de façon conductrice à l'unité à soupape de commande de l'air de compensation (12) et à l'unité de ventilation (6), les éléments connectés fonctionnellement côté sortie au dispositif de réglage des zones de la cabine (3) conservant les informations dirigées unilatéralement par cette dernière.

2. Système de ventilation de cabine pour la climatisation d'unités de fuselage d'un avion de passagers selon la revendication 1, caractérisé en ce que ledit système est équipé ou dépourvu d'une unité d'absorption du dioxyde de carbone (5), l'unité de ventilation (6) en cas d'absence de ladite unité étant directement connectée en fonction de l'écoulement d'air à l'unité d'échange thermique (4).

3. Système de ventilation de cabine pour la climatisation d'unités de fuselage d'un avion de passagers selon la revendication 1, caractérisé en ce que la zone de conditionnement d'air (10) est divisée en une cabine pour passagers (17) et un cockpit (18) qui constituent tous deux des zones climatisées séparées.

4. Système de ventilation de cabine pour la climatisation d'unités de fuselage d'un avion de passagers selon la revendication 3, caractérisé en ce que la cabine pour passagers (17) et le cockpit (18) sont connectés séparément en fonction de l'écoulement d'air au dispositif mélangeur d'air (9), les connexions d'écoulement d'air séparées présentant un point de coupe fonctionnel (16) qui est relié de manière conductrice et fonctionnelle à une entrée du dispositif de réglage des zones de la cabine (3).

5. Système de ventilation de cabine pour la climatisation d'unités de fuselage d'un avion de passagers selon la revendication 1, caractérisé en ce que l'unité de préparation d'air frais (8) se compose au moins de deux dispositifs de préparation d'air frais (8.1; 8.2) connectés de manière conductrice et fonctionnelle au dispositif de réglage de l'installation de conditionnement d'air (2), un échange mutuel d'informations existant entre lesdits éléments, et au moins deux soupapes de commande des quantités d'air (11.1; 11.2), soupapes qui appartiennent à l'unité à soupape de commande des quantités d'air (11), sont placées en fonction de l'écoulement d'air en amont desdits éléments, à l'entrée desquels se trouve de l'air frais séparé, et qui sont connectées de manière conductrice et fonctionnelle au dispositif de réglage de la pression en cabine (1), un échange mutuel d'informations ayant lieu entre lesdits éléments.

6. Système de ventilation de cabine pour la climatisation d'unités de fuselage d'un avion de passagers selon les revendications 1 et 4, caractérisé en ce que l'unité à soupape de commande de l'air de compensation (12) se compose au moins de deux soupapes de commande de l'air de compensation (12.1; 12.2), qui sont liées dans la connexion séparée en fonction de l'écoulement d'air entre le dispositif mélangeur d'air (9) et la cabine pour passagers (17) et/ou le cockpit (18), aux entrées de celles-ci se trouvant de l'air de compensation séparé, et sont connectées de manière conductrice et fonctionnelle à une sortie du dispositif de réglage des zones de la cabine (3), ce dernier préparant les informations dirigées unilatéralement côté sortie.

7. Système de ventilation de cabine pour la climatisation d'unités de fuselage d'un avion de passagers selon la revendication 1, caractérisé en ce que les connexions conductrices sont des boucles de contrôle, dont la liaison conductrice à l'intérieur du système de ventilation de cabine, qui est un système de recyclage de l'air en cabine, assure l'échange d'informations avec une fonction de contrôle entre les éléments durant le vol.

8. Système de ventilation de cabine pour la climatisation d'unités de fuselage d'un avion de passagers selon la revendication 1, caractérisé en ce que l'unité de filtrage des particules et/ou des odeurs (7), l'unité de ventilation (6), l'unité d'absorption du dioxyde de carbone (5) et l'unité d'échange thermique (4) sont composées de plusieurs dispositifs travaillant fonctionnellement de la même manière, éléments qui sont intégrés à l'unité concernée.

9. Système de ventilation de cabine pour la climatisation d'unités de fuselage d'un avion de passagers selon la revendication 1, caractérisé en ce que l'unité de filtrage des particules et/ou des odeurs (7) est destinée à retenir les composantes de l'air de recirculation, préférentiellement les particules et les germes, plus précisément les bactéries et les virus, de même que les odeurs et autres impuretés.

10. Système de ventilation de cabine pour la climatisation d'unités de fuselage d'un avion de passagers selon la revendication 1, caractérisé en ce que l'unité d'absorption du dioxyde de carbone (5) est destinée à retenir les composantes de dioxyde de carbone de l'air de recirculation et se compose de filtres pour matières solides, préférentiellement de filtres solides et de filtres en amine, leur régénération étant prévue par l'utilisation de la chaleur résiduelle de l'air de recirculation.
